Europäisches Patentamt

**European Patent Office**

**Office européen des brevets**

(19)

(11) Publication number: **0 019 936**
**B1**

(12) **EUROPEAN PATENT SPECIFICATION**

(45) Date of publication of patent specification: **26.01.83**

(51) Int. Cl.³: **H 04 N 9/02, H 04 N 9/39**

(21) Application number: **80103094.1**

(22) Date of filing: **04.06.80**

(54) **Method and device for digital encoding and decoding of composite PAL video signal.**

(30) Priority: **05.06.79 IT 6820479**

(43) Date of publication of application:
**10.12.80 Bulletin 80/25**

(45) Publication of the grant of the patent:
**26.01.83 Bulletin 83/4**

(84) Designated Contracting States:
**DE GB NL SE**

(56) References cited:
**FR - A - 2 397 116**

**INSTITUTE OF ELECTRICAL AND ELECTRONICS
ENGINEERS, International conference on
communications 11—13 June 1973, New York,
US, J. E. THOMPSON: "Predictive coding of
composite pal and NTSC colour television
signals", pages 48—32 to 48—38.
INTERNATIONAL CONFERENCE ON
COMMUNICATIONS ICC '79 conference record,
vol. 2 of 4, 10—14 June 1979, New York, US, L.
CHIARIGLIONE et al.: "Transform coding of PAL
composite signals", pages 23.5.1 to 23.5.5.**

(73) Proprietor: **CSELT Centro Studi e Laboratori
Telecomunicazioni S.p.A.
Via Guglielmo Reiss Romoli, 274
I-10148 Turin (IT)**

(72) Inventor: **Chiariglione, Leonardo
V.S. Ambrogio 4
Villar Dora Torino (IT)**
Inventor: **Guglielmo, Mario
C.so Meinardi, 24
Montalenghe Torino (IT)**

(74) Representative: **Riederer Freiherr von Paar zu
Schönau, Anton et al,
Müllerstrasse 31
D-8000 München 5 (DE)**

Courier Press, Leamington Spa, England.

# Method and device for digital encoding and decoding of composite PAL video signal

The present invention relates to video signal transmission systems and more particularly it concerns a method of and a device for the digital encoding and decoding of composite PAL video signal.

As known, in order to obtain an efficient transmission of the video signal it is necessary to effect a reduction in the data flow deriving from a simple sampling operation and from the quantization of the analog signal.

The techniques utilized so far make use of predictive algorithms (DPCM), bidimensional transform algorithms or mixed algorithms (DPCM-transforms).

The predictive algorithms quantize the difference between the arriving signals and their predictions, obtained by means of suitable algorithms from the already quantized signal, as described for example in the following document: "Predictive coding of composite PAL and NTSC colour television signals" (J. E. Thompson), IEEE International Conference on Communications, June 1973, in which, by means of the choice of a suitable value of sampling frequency, composite quantized colour signal samples, characterized by the same colour sub-carrier phase, are achieved placed at the minimum space distance in two temporally adjacent lines. The transform methods are based on the quantization of the coefficients obtained by applying suitable orthogonal operators; finally mixed methods encode in DPCM line by line the homologous coefficients obtained by applying transformation on adjacent lines, effecting the transformation on the entire line or on the various blocks into which it may be uniformly subdivided.

Predictive algorithms although they are easy to implement, do not allow sufficient reduction in the data flow; the transformation algorithms are very efficient, but difficult to implement as they require extensive amount of computations.

Mixed algorithms realize a good efficiency versus complexity compromise solution and have been applied for monochrome video signal transmission as well as for colour system NTSC. In these applications the prediction is obtained usually among homologous coefficients of blocks that occupy the same position in lines that follow one another in time and space.

For the coding based on the same method as above of the composite PAL signal, no problems are encountered for the encoding of coefficients carrying the only luminance signal (analogously to what happens for monochrome signal); on the contrary in the processing of colour information new complexity factors are introduced dependent on the distance chosen between the two lines used to perform the prediction.

It is clear in fact that the best correlation for the prediction is achieved by using lines spatially as near as possible. Owing to the just mentioned complexity, the minimum distance at which the prediction of the coefficients carrying colour information in PAL system can be achieved by the known methods is equal to a space interval of 4 lines as in this case there is at most a sign inversion of the coefficients.

But at a 4 line distance there is a high loss of correlation that entails a considerable reduction in the coding efficiency.

At a two-line distance the problem is solved by applying the transformation described in the appended claims to which reference should now be made, and in which a digital encoding method of composite PAL video signal is defined that is a good compromise between the opposite requirements of construction simplicity and efficiency.

The characteristics of the present invention will become clearer from the following description of a preferred way of embodiment of the same, taken non in a limiting sense, but by way of example taken in connection with the annexed drawings in which:—

Fig. 1 is a general scheme of the transmitting end of the encoding system of the composite PAL video signal;

Fig. 2 is a general scheme describing the receiving end of the same encoding system;

Fig. 3 is a detailed scheme describing the block denoted by COD in Fig. 1;

Fig. 4 is a detailed block diagram depicting the block denoted by DEC in Fig. 2;

Fig. 5 is a block diagram that depicts in details the block denoted by $T_1$ in Fig. 3.

In PAL video signal at the beginning of each line a synchronism signal (burst) is present consisting, as known, of a sinusoidal signal with a frequency equal to the unmodulated color sub-carrier fsc, that can be supposed as obtained from a rotating vector whose position is identified at each instant, in a given orthogonal reference system by the amplitude value and by an angle $\theta$ between the vector itself and one of the axes, or yet from the value of the two projections of the vector on the orthogonal axes.

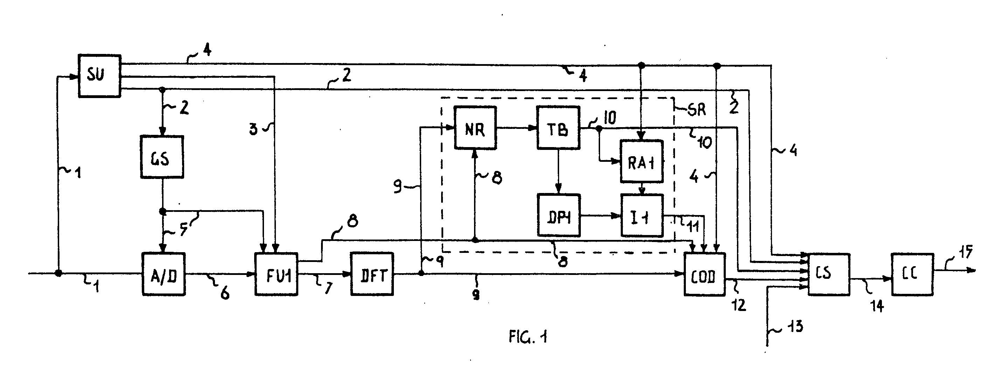

In Fig. 1 reference SU denotes a synchronism unit arranged to receive at the input, connected to wire 1, the video portion of the colour video signal that is to be transmitted and to produce at the output, on wires 2, 3, 4 suitable control signals. More particularly, the signal present on wire 2 synchronizes the transmitter, described in the drawing, with the synchronism signals contained in the video signal; the signal present on wire 3 consists of a sequence of pulses able to identify the portion of the video signal comprising the decoding of the chrominance signal and the composite signal relevant to the image; the signal present on wire 4 consists of a sequence of pulses, each one of them indicating the beginning instant of a field.

SU begins to emit the described signals, that will be interpreted by the blocks receiving them also as enabling signals, beginning from the first of the two fields forming the video frame.

The embodiment of a circuit like SU is not a problem to the skilled in the art as into the video signal are already incorporated portions of the signal having a configuration that can be recognized "a priori" to identify the various parts.

GS denotes a usual oscillator circuit arranged to generate the required sampling frequency fs of the video signal; GS is synchronized by the signal it receives from SU through wire 2. More particularly it is advantageous to choose for fs a value dependant on the frequency of the colour sub-carrier fsc from relation fs=12/5 (fsc—25 Hz); in this way fs can be easily derived from fsc and the value so obtained for fs satisfies the Nyquist's sampling criterion.

A/D denotes a usual analog-to-digital converter that performs the sampling of the video signal present on wire 1, at a rhythm established by the frequency of signal fs it receives from GS through wire 5.

Reference FU1 denotes a logic circuit able to receive at the input: from wire 6 the sampled video signal emitted by A/D, from wire 3 the signal already examined emitted by SU, and from wire 5 the rhythm of the signals present on wire 6.

When the burst samples, identified by the signal present on wire 3, are present at the input connected to wire 6, FU1 selects a sequence of 12 samples, chosen beginning from a predetermined sample, and transmits said sequence at the output on connection 7. Afterwards, always dependant on the information present on wire 3, the samples of the composite signal belonging to a line, present on wire 6, are in turn grouped into blocks of 12 samples and each group is sent in sequence to the output on connection 7.

At the same time with each group of samples, both of burst and of image signal, FU1 emits on wire 8 an enabling signal whose function will be examined hereinafter.

It is now to be noted that the subdivision of the line into blocks of 12 samples depends on the choice made on the sampling frequency fs, but it is independent of the characteristics of PAL signal.

By the choice of 12 samples (or of an integer multiple K of 12) each block contains 5 complete periods (or yet 5K periods) of colour sub-carrier fsc. As known from the theory, performing in this case the discrete Fourier transform the information carried by the colour sub-carrier is basically concentrated into just two coefficients that, if the computation is effected in the increasing frequency range, come out to be

the 10th and 11th (or yet, for K≠1, the K 10th and the K 10th+1) coefficient.

It is clear that by choosing a different value for sampling frequency fs, also the length of the block is different and this is not prejudicial to the validity of the method used in the present invention; in addition it is clear that, by the use of different transformation techniques that can originate a different order of the coefficients, the colour information, even if it remains concentrated into two coefficients, can affect a pair of coefficients different from the tenth and the eleventh.

For the sake of brevity in the following description reference will be made to the tenth and eleventh coefficients, under the assumption of a sequential order, but it is clear that what stated for these coefficients may be applied to the two coefficients on which chrominance information is concentrated.

Reference DFT denotes a device able to perform the discrete Fourier transform on the 12 samples it receives at the input on connection 7. Devices such as DFT are generally known in the technique.

At the output of DFT on connection 9 there are 12 coefficients of the Fourier transform that hereinafter will be referred to as $c1 \ldots c12$, that will be simultaneously sent to two blocks SR and COD, which will be examined later.

Reference SR denotes a circuit arranged to detect at the beginning of each line the burst phase by utilizing the 10th and 11th coefficients of the Fourier transform present on connection 9 when from FU1 the enabling signal is sent to SR via wire 8. In fact from what previously stated as to the discrete Fourier transform it can be derived that since the burst is nothing else but a sinusoid having the same frequency as that of the colour sub-carrier, the whole information relating to it is concentrated on the two transform coefficients that, in the frequency order of the coefficients, are still the 10th and the 11th coefficients.

These coefficients are the projections of the vector on the orthogonal axes; the value of the angle $\theta$, comprised between the vector and the horizontal axis, is easy to derive from the known trigonometric relationships. Sinus and cosinus of said angle are respectively obtained from the ratio of the horizontal and vertical projection with the vector modulus defined as

$$\sqrt{cb_{10}^2+cb_{11}^2},$$

where $cb_{10}$ and $cb_{11}$ denote the tenth and the eleventh coefficients of the transform relating to the burst samples. The enabling signal is emitted by FU1 at the same time as the 12 burst samples are sent to DFT.

By using coefficients $cb_{10}$, $cb_{11}$ circuit SR computes also two numbers $\alpha$, $\beta$ that, emitted at the output on wire 11, will be utilized, as will be seen later, by COD for predicting the coefficients carrying the chrominance information of the video signal.

More particularly $\alpha$ and $\beta$ are equal to $+\cos 2\theta$ and $-\sin 2\theta$ when between the line used for the prediction and the next in time the burst undergoes a phase delay of $\pi/2$, and to $-\cos 2\theta$ and $+\sin 2\theta$ in case of phase lead of $\pi/2$.

It is now worth noting that the signal going along wire 8 if it is interpreted as enabling signal for SR has a meaning of disabling signal for COD and vice-versa.

Circuit SR consists of blocks NR, TB, DP1, I1, RA1. Block NR is able to effect the normalization of the coefficients $cb_{10}$ and $cb_{11}$, it receives from connection 9, according to the normalization factor

$$1/\sqrt{cb_{10}^2+cb_{11}^2}$$

in order to obtain sine and cosine functions of the angle $\theta$ that defines the burst phase.

Block TB is basically composed of a memory into which are registered the functions of arc sine and arc cosine; TB is arranged to supply at the output on wire 10 the value of the angle that corresponds to the sine and cosine computed in NR.

Block DP1 is arranged to receive from TB the value of the angle $\theta$ and to supply the sine and cosine functions of the double angle $2\theta$.

Block I1 is arranged to invert alternatingly at each line one time the sign of $\sin 2\theta$ and next time the sign of $\cos 2\theta$, dependant on the phase shift (delay-lead) undergone by the burst, that has as a consequence on the prediction an inversion of the sign of the matrix, defining the linear transformation used for the prediction.

As a frame is composed of an odd number of lines (625) the phase shift at the beginning of a frame is opposite to the one of the preceding frame.

As a consequence the lines that occupy the same position in different fields, and more particularly also the two first lines of each field used for the transmission, have a phase shift that is to be determined so as to correctly assign the initial signs to $\cos 2\theta$ and $\sin 2\theta$.

Block RA1 performs this task that's, after receiving from wire 4 the signal of field START, it compares the values of angle $\theta$ received from TB, relevant to two successive lines, and emits towards the output connected to I1 a signal arranged to force the initial assignment by I1 of the sign "+" to $\cos 2\theta$ and of the sign "−" to $\sin 2\theta$, when between the first and the second line there is a phase delay of the burst and vice-versa $(-\cos 2\theta; +\sin 2\theta)$ in case of lead.

Reference COD denotes a coding circuit that receives at the input: the 12 coefficients emitted by DFT on connection 9, the enabling signal emitted by FU1 on wire 8; the numbers $\alpha$ and $\beta$ sent by SR through connection 11, and finally the signal of field START, present on wire 4.

The signal processed by COD is emitted at the output on connection 12.

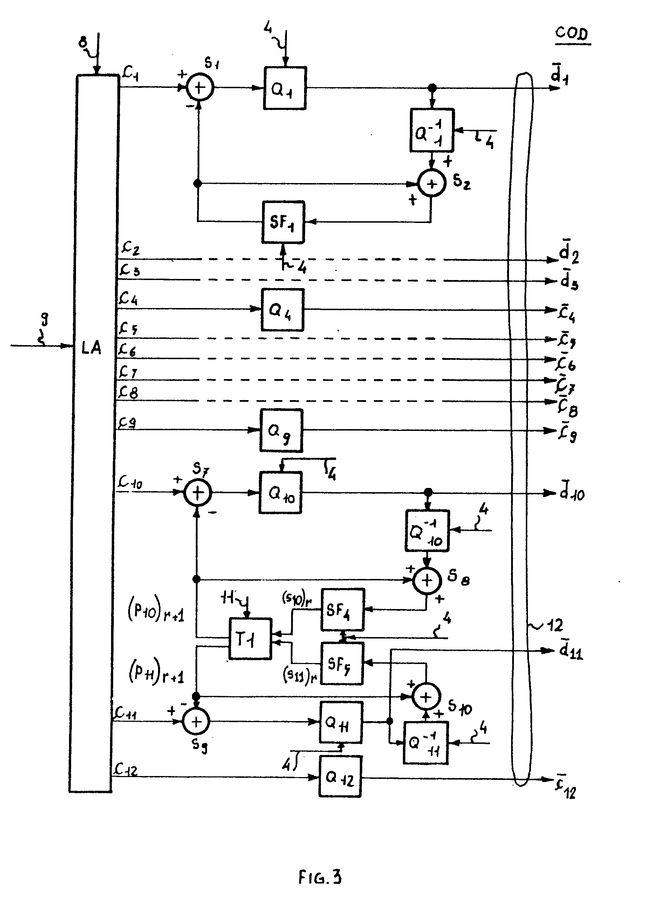

In COD a portion of the 12 coefficients is simply coded in PCM and the remaining portion undergoes a coding of type DPCM; the working operation and the structure of COD will be examined in detail hereinafter in connection with Fig. 3.

Reference CS (Fig. 1) denotes a source coder arranged to receive from wire 10 the burst phase information, from connection 12 the video portion of the video signal, from wire 4 and from wire 2 respectively the field and line synchronism, from wire 13 the audio signal and the service signals; CS is also able to insert suitable specific words denoting the field and line START and to emit at the output, on connection 14 a composite video signal ready to be transmitted upon channel coding.

The embodiment of a source coder as CS is not a problem to the skilled in the art.

Reference CC denotes a channel coder that adds to the flow of bits coming from CS through wire 14, some bits protecting the information against the noise by utilizing known codes for error correction.

The signal present at the output of CC, on wire 15, is the complete video signal produced by the transmitter of Fig. 1.

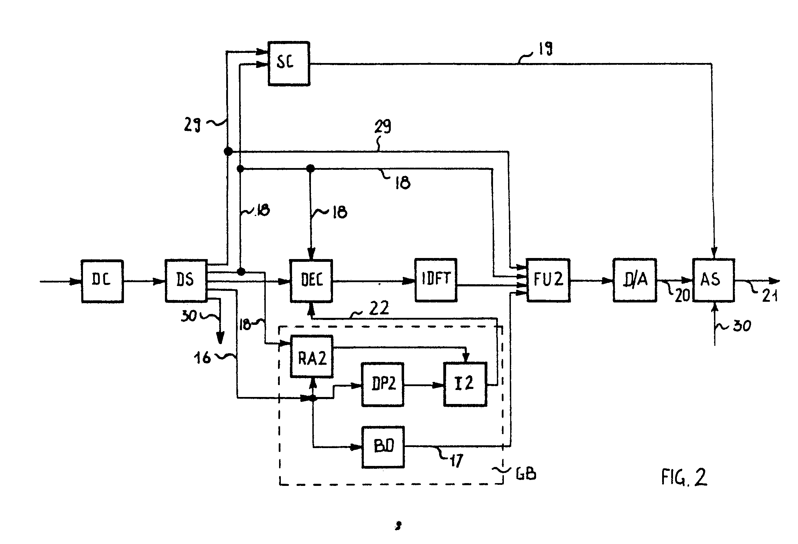

In Fig. 2 references DC and DS denote a channel and source decoder respectively having complementary functions to those of the blocks denoted by CC and CS respectively in Fig. 1.

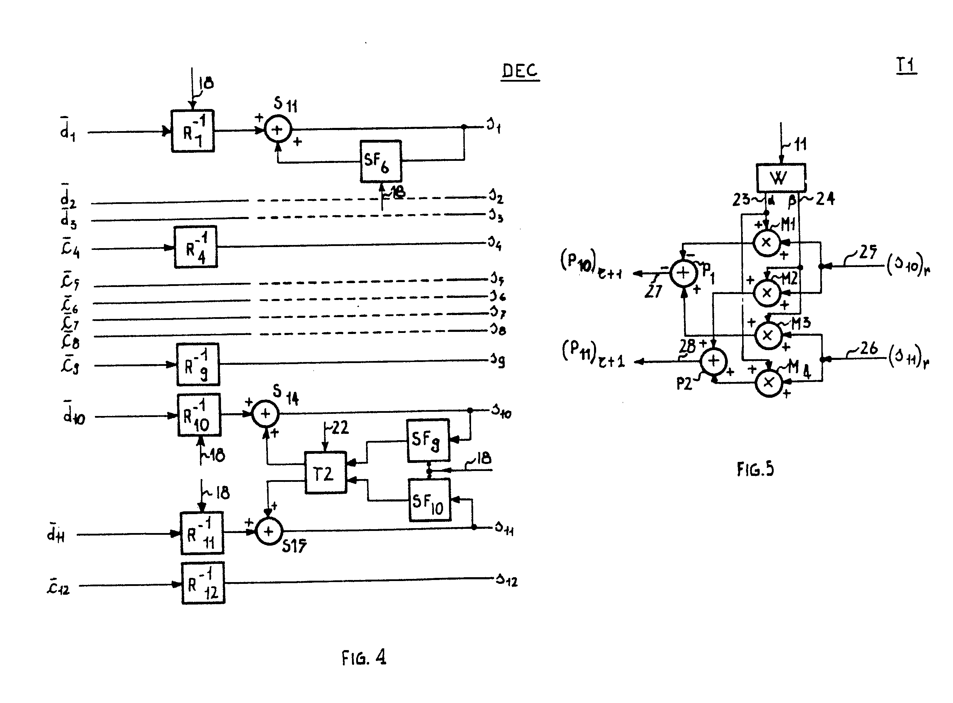

Also the blocks denoted by DEC, IDFT, FU2 and D/A in Fig. 2 will have perfectly complementary functions to the blocks denoted by COD, DFT, FU1 and A/D respectively in Fig. 1. The structure of DEC, more particularly, will be examined in connections with Fig. 4.

Reference GB (Fig. 2) denotes a device, whose structure will be examined hereinafter, able to generate samples of a periodic signal (burst of predetermined amplitude, frequency and sampling rate; GB receives from DS, through wire 16, the indication of the initial phase of the burst signal to generate, that is emitted at the output connected with connection 17; in addition GB receives from connection 18 the field synchronism signal.

Besides supplying the burst samples, GB also computes numbers $\alpha$ and $\beta$, that sent to DEC through wire 22, define the transform utilized by DEC for the prediction of the coefficients $c_{10}, c_{11}$.

Circuit GB consists of blocks BD, DP2, I2 and RA2. Blocks DP2, I2 and RA2 carry out identical functions to blocks DP1, I1 and RA1 contained in the circuit SR of Fig. 1.

Block BD (Fig. 2) is able to receive from wire 16 the value of the angle $\theta$, that identifies the burst phase, and to convert it into a sequence of addresses for the reading of a memory, non represented and belonging to BD.

The addresses formed in this way correspond to the position of the memory that contain the burst values, sampled at frequency fs with desired phase and amplitude, said value are made available at the output on connection 17.

Reference SC denotes a signal generator able to reproduce in reception all the synchronisms that are necessary to reconstruct the complete video signal (frame and line synchronisms) and the portion of frame consisting of the first and last lines that do not carry image information and have not been transmitted; SC is synchronized by a field synchronism word, that is extracted from the video signal through DS and sent to SC through connection 18, and from line synchronism, that it receives from DS through wire 29.

Reference AS denotes a usual adding circuit able to effect the addition between the image signal coming from D/A through wire 20 and synchronism signals coming from SC through connection 19.

At the output of AS, on wire 21, is then present the complete analog video signal.

It is to be noted that blocks AS and CS cooperate with FU2 in order to carry out the inverse function of FU1, so as to render the video signal continuous, recovering all the constant portion signals.

In Fig. 3 reference LA denotes a set of logic gates arranged to enable, on the basis of the signal it receives from wire 8, the inputs connected to connection 9, carrying the 12 coefficients of the Fourier transform already examined.

At the output of LA there are then present said twelve coefficients that undergo the processing that will be examined hereinafter.

Coefficients $c_4$, $c_5$, $c_6$, $c_7$, $c_8$, $c_9$, $c_{12}$ are coded in PCM in the same number of quantizers denoted by $Q_4 \ldots Q_9$, $Q_{12}$; the already coded coefficients are denoted by $\bar{c}_4$, $\bar{c}_5$, $\bar{c}_6$, $\bar{c}_7$, $\bar{c}_8$, $\bar{c}_9$, $\bar{c}_{12}$.

Said coding follows already known and usual procedures, basically consisting in a separate presentation of each coefficient with a preassigned number of bits on the basis of the statistical properties of the single digital variables known "a priori".

Coefficients $c_1$, $c_2$ and $c_3$ undergo all the same coding process known as DPCM; on the drawing, for a sake of simplicity, only the processing of $c_1$ is represented. As known, the DPCM coding consists in the transmitting only the difference, suitably quantized, between a sample and the foreseen value of the same on the basis of the previous coded samples; the prediction is carried out by utilizing the statistical properties of the signal that are known "a priori".

In our case, dealing with coefficients of the transform performed on blocks of 12 contiguous samples of each line, the best correlation exists among coefficients belonging to blocks occupying the same position in lines subsequent-in-space; but this would entail a half-frame-period delay for the prediction, with the necessity of utilizing a memory able to contain the transform coefficients of a complete field.

In our case, to avoid the use of this memory with all the management complications connected to it, the prediction is effected among coefficients that occupy the same position in lines subsequent-in-time.

Always in Fig. 3, references S1 and S2 denote two usual adders; $Q_1$ denotes a usual quantizer adapted to the statistics of the input signal.

$Q_1$ exploits at least two different quantization characteristics; the one having rough quantization steps for the first line of each field; so as to speed up the attainment of the steady condition for the quantization; the other with more refined quantization steps is intended for the functioning of $Q_1$ under steady condition. So $Q_1$ receives also through wire 4 the information of field START.

References $Q_1^{-1}$, $Q_{10}^{-1}$, $Q_{11}^{-1}$, denote a number of blocks that carry out a "complementary" function to quantizers denoted by $Q_1$, $Q_{10}$, $Q_{11}$ respectively.

This means that, for instance, while $Q_1$ transfers a m-level signal, that can be represented by j bits, into another n-level signal, that can be represented by q bits, where $n<m$ and $q<j$, $Q_1^{-1}$ converts again the signal outgoing from $Q_1$ into the j-bit signal for an amount of m available levels, of which only n are utilized. In fact it is not possible to recover the information that is lost by quantization in $Q_1$.

Reference SF1 denotes a group of usual shift registers having the same number as that of the bits required to represent the first coded coefficient, such registers are gifted with so many positions as are the blocks (each one consisting of 12 samples) that form the line.

On the basis of the scheme, when at the input of S1 signed with "+" a given coefficient is present, at the input signed with "−" is also present the coefficient first coded and then decoded, relevant to the same block of the line preceding in time.

The reason for which at the input "−" of S1 such coefficient, first coded and then decoded, instead of the uncoded coefficient of the previous line is present, is due to the fact that the latter obviously is not available at the receiver that must use for the prediction the decoded coefficients. As it is necessary for the prediction carried out by the transmitter to coincide with that of the receiver, the transmitter has a decoding circuit (formed by $Q_1^{-1}$, S2 and SF1) identical to the one present in the receiver.

Thus the value of the coefficient present at the input "−" of S1 is perfectly identical to the value (S1) of the coefficient that has been decoded by the receiver.

In S2 the result of the addition effected by S1 is added, after quantization in $Q_1$ and following "recover" in $Q_1^{-1}$ of the original number of bits, to said decoding coefficient relevant to the line preceding in time; the result of S2, that is the new decoded value of the coefficient relevant to the line under examination, is stored in the last position of SF1, with respect to the shift direction, determining at the same time the shift of a position of all the values stored in it.

To overcome the uncertainty condition that could be encountered in processing the coefficients of the first line, registers SF1, relevant to the processing of coefficient $c_1$, are initialized in known way upon receiving, by means of wire 4, the signal of field START, at the more probable value of $c_1$ that, in first approximation can be put in relationship with the mean value of luminance of video images. The initial value of analogous shift registers, not represented in the drawing, relevant to the processing of coefficients $c_2$ and $c_3$ is zero, because such is the most probable value.

Coefficients $c_{10}$ and $c_{11}$, on which the most part of the colour information depends, undergo the same type of DPCM coding as coefficients $c_1$, $c_2$, $c_3$ with the only variant that the prediction signal, that in case of $c_1$ was that directly sent from SF1 to S1 and S2, now undergoes in the block denoted by T1 a particular processing, that will be examined in detail in connection with Fig. 5.

This processing takes into account the way in which the chrominance signal is processed in PAL video transmission system.

More particularly the operations allowing the correct prediction of chrominance signals $c_{10}$, $c_{11}$ consist of a linear transmission; the connection 11, coming from SR (Fig. 1) carries to T1 (Fig. 3) the value of numbers $\alpha$ and $\beta$ that define the transformation.

As to what stated above the functions carried out by adders S7, S9, and S8, S10 respectively are perfectly analogous to the functions carried out by S1 and S2; thus the operation of $Q_{10}$, $Q_{11}$ is analogous to the one of Q1 and the working operation of SF4, SF5 to that of SF1.

The initialization of SF4, and SF5 takes place by means of resetting to zero.

Reference $\overline{d_1}$ denotes the word, consisting of a given number of bits, that is obtained from coefficient $c_1$ after the processing already described by blocks S1, Q1, $Q1^{-1}$, S2 and SF2, that form together a coding system of DPCM type.

References $\overline{d_2}$, $\overline{d_3}$ denote two words that have been obtained in the same way as $\overline{d_1}$, from coefficients $c_2$, $c_3$ respectively.

References $\overline{d_{10}}$, $\overline{d_{11}}$ denote two words that have been obtained analogously to $\overline{d_1}$, from both coefficients $c_{10}$, $c_{11}$, the only variant consisting of the different way by which the prediction of $c_{10}$, $c_{11}$, is operated by block T1.

In Fig. 4, references $\overline{d_1}$, $\overline{d_2}$, $\overline{d_3}$, $c_4 \ldots c_9$, $\overline{d_{10}}$, $\overline{d_{11}}$, $\overline{c_{12}}$ have the same meaning already examined in Fig. 3; references $s_1$, $s_2 \ldots s_{12}$ denote the coefficients obtained after the decoding (decoded coefficients).

As already said, coefficient $s_1$ is coincident with the one present at the input "−" of S1 (Fig. 3); the same is valid for $s_2$, $s_3$ (Fig. 4).

References $S_{11}$, $S_{14}$, $S_{15}$ denote a number of adders; references SF6, SF9, SF10, denote a number of shift registers having structure and functions perfectly analogous to registers SF1, SF5 of Fig. 3.

References $R1^{-1} \ldots R12^{-1}$ (Fig. 4) denote a number of devices that effect on words $\overline{d_1} \ldots \overline{c_{12}}$, received at the input, the same operation described for blocks $Q_1^{-1}$, $Q_{10}^{-1}$, $Q_{11}^{-1}$ of Fig. 3.

Reference T2 (Fig. 4) denotes a block identical to that denoted by T1 in Fig. 3.

Fig. 5 depicts the circuit T1 that effects the prediction of chrominance coefficients $c_{10}$, $c_{11}$ of the (r+1)-th line by means of those of r-th.

In Fig. 5 references M1, M2, M3, M4 denote four usual multipliers; more particularly, M1 is in addition able to invert the sign of the effected product.

References P1, P2 denote two normal adders.

Reference W denotes a normal two-cell register, able to receive from wire 11 the previously examined numbers $\alpha$ and $\beta$, to store and to present them at the output on wires 23 and 24.

The operation of the circuit of Fig. 5 will be examined hereinafter.

The operation of the device that, according to the invention, effects the digital encoding of composite PAL video system will be now described.

A base-band analog video signal may be supposed to be available at the transmitter input on wire 1 (Fig. 1).

Said signal is sampled and quantized in A/D at frequency fs supplied by oscillator circuit GS that in turn is controlled by line synchronism; said synchronism is detected by block SU, connected at the input to wire 1, and transmitted to GS via wire 2.

It is now worth noticing that, as known, it is not necessary to transmit at the output of the transmitter, in our case from wire 15, all the information relating to the video signal present at the input, in our case on wire 1 and then on wire 6.

It is known that the image signal is arranged on 575 lines out of the nominal 625 of the frame.

However, the transmitter does not only transmit the information relating to only 575 useful lines, but also, in order to allow the local oscillator of the receiving apparatus to be locked onto the burst, it will transmit at least the information relating to the burst itself present on same lines that do not contain the image: more particularly, it will be sufficient to transmit only the phase information assumed on each line, as the burst can be recovered by the receiver beginning from said information.

The function of FU1 is the one of separating the signal portions that must be afterwards processed (burst, video signal) from those that are not necessarily transmitted (cancellation, synchronisms).

More particularly, as FU1 receives from SU, via wire 3, the information of line START, counts a certain number of periods scanned by the signal present on wire 5 (for instance 75, corresponding to the completion of line return, and the initial burst transient) without emitting any signal, then it lets through towards output 7, connected to DFT, 12 samples of the burst that are arranged to identify its phase; at the same time FU1 emits on wire 8 a signal enabling the input of SR and disabling the input of COD.

DFT effects on the 12 samples of burst, received in parallel from FU1 via connection 7, discrete Fourier transform by processing 12 coefficients $cb_1 \ldots cb_{12}$ emitted at the output via connection 9 that, being the input of COD disabled, are stored in SR.

Among the 12 received coefficients, SR utilizes only the 10th and 11th (that is $cb_{10}$ and $cb_{11}$) to compute the phase $\theta$ of the burst, whose value is emitted at the output on wire 10, and to compute the two numbers $\alpha$ and $\beta$ that, emitted on the output connected to wire 11, are utilized by COD as will be seen later. FU1, once completed the transmission of said 12 burst samples, blocks its outputs for a predetermined time duration so as to wait for the arrival of samples of the image signal to be transmitted.

Immediately afterwards FU1 emits on wire 8 a signal complementary to the previous one that enables the input of COD and disables the input of SR; at the same time it lets through on connection 7 towards DFT the samples relevant to the image signal, after grouping them into groups of 12 samples at a time up to the completion of all the line image samples.

The same procedure takes place for all the remaining lines.

COD, once enabled by the signal present on wire 8, receives from connection 9 all the coefficients $c_1 \ldots c_{12}$ of the discrete Fourier transform carried out in DFT and carries out, as already seen, on some of them a DPCM coding and on the remaining part a PCM coding.

The choice of DPCM coding depends on the possibility of an actual reduction of the signal reconstruction error, that takes place when the coefficient correlation among the homonymous coefficients ($c_1 \ldots c_{12}$) in different lines has a value high enough, that is of the order of 0.85.

In our case, experimental results have shown that this condition is met by coefficients $c_1$, $c_2$, $c_3$ of the luminance signal and by the coefficients $c_{10}$ and $c_{11}$ of the chrominance signal; more particularly, the correlation relating to $c_{10}$ and $c_{11}$ must be evaluated between the coefficient of a line and the coefficient, transformed by means of T1 (Fig. 3), relating to the block that occupies the same position in the line preceding in time.

It is obvious that it is possible to operate a different choice of the coefficients relating to the luminance signal, to be coded in DPCM, without going out of the scope of the invention.

The operation of COD (Fig. 3) will be now described under the hypothesis that there are present in the input, on connection 9, the coefficients relating to the 1st block of the line that in the time order has index r+1.

When the coefficient $c_1$ of the first block computed by DFT, is present at the input "+" of S1, SF1 presents at the input "−" of S1 the coded coefficient $C_1$, relating to the first block of line r-th.

Therefore $Q_1$ receives the difference, represented by j bits, between the two coefficients and quantizes it, according to its present characteristic, by q bits.

The word $\overline{d}_1$ at the output of $Q_1$ is sent via connection 12 to source coder CS (Fig. 1) so that it may be arranged for the transmission and at the same time to the input of $Q_1^{-1}$ (Fig. 3), so that it may be again reconverted into a j-bit representation.

The quantized difference is added in S2 to coefficient $c_1$ relating to the first block of line r, and the output of S2, that represents the decoded coefficient S1 of line (r+1)-th, is written in the last position of SF1, causing at the same time a shift towards the left of all the other decoded coefficients previously stored; then S1, relating to line r, is no longer useful, and gets lost.

At this point, at the input "+" of S1 coefficient $C_1$ is present, computed by DFT, relating to the second block of the same line r+1, while in the first position of SF1, and then at the input "−" of S1, decoded coefficient S1 is present of the second block of line r.

The process continues as just examined for all the first coefficients $c_1$ of the remaining blocks of line r+1; once this procedure is completed the same procedure repeats among the first coefficients, computed by DFT, of line r+2 and the coded coefficients of line r+1 up to the completion of the lines of one field.

Coefficients $c_2$, $c_3$ are processed analogously.

Coefficients $c_4 \ldots c_9$ and $c_{12}$ undergo just a normal coding of PCM kind in blocks $Q_4 \ldots Q_9$ and $Q_{12}$ respectively.

Coefficients $c_{10}$, $c_{11}$ undergo a DPCM coding operation analogous to the one already examined for coefficient $c_1$, with the only important variant consisting in linearly transforming by means of block T1 both coded coefficients relevant to line r, supplied by SF4 and SF5.

Said linear transformation, that forms one of the specific objects of the present invention, takes into account the three factors that affect the values of chrominance coefficients $c_{10}$ and $c_{11}$, under the hypothesis of colour permanency in a block with respect to the homonimous block of the line preceding in time.

The three factors are the following:

1) phase shift in the burst, that effects an anticipated or delayed rotation by $\pi/2$ between two lines subsequent-in-time;

2) known sign inversion of one of the two components of the chrominance signal between a line and the next one (L. Goussot, "La télévision monochrome et en couleur", Paris, Eyrolles, 1972, P. 153);

3) the line period is not an integer multiple of the period of the colour sub-carrier; consequently by effecting a frequency analysis of the samples belonging to the blocks occupying the same position in two lines subsequent-in-time, a further phase shift equal to a constant delay of $\pi/2$ must be taken into account.

The linear transformation, that takes into account these factors and allows the prediction of the value of the coefficients $c_{10}$ and $c_{11}$ of a block belonging to line $(r+1)$-th, beginning from the coded value of $c_{10}$ and $c_{11}$ relating to the block that occupies the same position in the line r-th, is just the one that is carried out by the scheme of Fig. 5; in our case it is detected by two values of numbers $\alpha$ and $\beta$ present on wire 11 and made at the same time available by W on wires 23 and 24 respectively.

In practice said transformation is obtained by making the product of the matrix $2 \times 2 \left( \begin{smallmatrix} -\alpha & \beta \\ -\beta & \alpha \end{smallmatrix} \right)$ by matrix $2 \times 1 \left( \begin{smallmatrix} s_{10} \\ s_{11} \end{smallmatrix} \right)$.

Said product is made as follows.

· Number $\alpha$ arrives at multiplier M1 through wire 23 and the decoded chrominance coefficient $(s_{10})_r$, referred to generic line r, through wire 25.

Number $\beta$ and, through wire 25, the coefficient $(s_{10})_r$ analogously arrive at M2.

Number $\beta$, through wire 24, and the decoded coefficient of chrominance $(s_{11})_r$, through wire 26, arrive at M3.

Finally number $\alpha$ arrives at M4 through wire 23 and the coefficient $(s_{11})_2$ through wire 26.

The signals present at the outputs of multipliers M1 and M3 are algebraically added in P1; at the output of P1 there is then present the signal $(p\,10)_{r+1}$, forming the prediction signal of the chrominance coefficient $c_{10}$ (Fig. 3). referred to generic line $r+1$.

In the same way the signals at the outputs of M2 and M4 (Fig. 5) are algebraically added in P2, at whose output there is then present the signal $(p11)_{r+1}$ forming the prediction signal of the chrominance coefficient $c_{11}$ (Fig. 3) referred to generic line $r+1$.

It is now worth noticing that the function of the field START signal carried out by wire 4 (Fig. 3) depends, as previously described, on the necessity of utilizing for the coefficients of the first useful line a quantization characteristic less refined with respect to that of the other lines: this in fact allows, as known, the speed up of the attainment of steady conditions by actually carrying out for the coefficients of the first line a PCM coding.

The video signal coded, and just described, by COD is sent, via connection 12, to CS (Fig. 1), where, in conjunction with the other information that the receiver may need for building up the whole message, undergoes, as examined, the so called source coding.

From CS, through wire 14, the complete video signal is sent to CC where it undergoes, as already examined, the necessary channel coding in order to be sent to the output on wire 15.

The signal present at the input of the receiver is decoded by DC (Fig. 2) and by DS that behave in a perfectly complementary way to, respectively, blocks CC and CS of the transmitter depicted in Fig. 1.

In addition also the function of correction of the errors originated from transmission channel is carried out in CD in a known way.

Then the signal undergoes an inverse process with respect to the one it has undergone in the transmitter, by means of the blocks: DEC with respect to COD; IDFT with respect to DFT, FU2 with respect to FU1; D/A with respect to A/D.

The portion of the signal consisting of the burst samples is regenerated in block GP beginning from the information of phase $\theta$ of the burst itself. This information is transmitted from DS to GB by means of wire 16; the operation of GB is the one previously seen.

Analogously to what has taken place in block COD (Fig. 1) of the transmitter, block DEC needs, for the prediction of the chrominance coefficients, numbers $\alpha$ and $\beta$; these are computed in block GB (Fig. 2) always dependant on the value of phase $\theta$ of the burst.

At this point all the portions of the video signal, no matter how encoded (burst, image signal), have been recovered in digital form and are present at the inputs of FU2 connected to the outputs of GB and IDFT.

FU2, by exploiting the frequency information carried by wires 18 and 29, arranges again in sequential form in the correct time position the samples of the burst and of the image signal.

The video signal processed in this way is reconverted into analog form by converter D/A and is then completed in AS with the necessary synchronism signals, comprising line and frame cancellation signals, arriving in analog form from SC via wire 19, and the audio signal, coming from DS via wire 30.

The signal present at the output of the receiver, on wire 21, forms then the complete video signal that was required.

## Claims

1. A method of digital encoding and decoding of composite PAL video signal, wherein in transmission: line START and field START information is first extracted from the video portion of the analog video signal which is then sampled at a frequency fs, dependent on the frequency fsc of the colour sub-carrier by means of the relationship:

$$fs = \frac{12}{5}(fsc - 25 \text{ Hz});$$

12 burst samples starting from a predetermined sample are then extracted at frequency fs from the burst signal of each line; then the samples of image signal relevant to each line of the field are grouped into blocks of 12 image samples; a discrete Fourier transform is then performed on said 12 burst samples and on said blocks of 12 image samples in order to produce subsequent series of twelve coefficients, a number of these series being relevant to the burst $(cb_1 \ldots cb_{12})$, others being relevant to the image signal $(c_1 \ldots c_{12})$, only the tenth $(cb_{10})$ and the eleventh $(cb_{11})$ coefficients being utilized out of each series of twelve burst coefficients, said tenth $(cb_{10})$ and eleventh $(cb_{11})$ coefficients being the components of a rotating vector representative of the burst and being multiplied by a normalization factor

$$1/\sqrt{cb_{10}^2 + cb_{11}^2}$$

so that the angular functions of angle $\theta$, defining the phase of that rotating vector, can be obtained; the first three coefficients $(c_1, c_2, c_3)$ of each series of twelve coefficients of the image signal (image coefficients), undergoing a usual encoding of DPCM type that takes into account the correlation existing among image coefficients belonging to blocks occupying the same position in time adjacent lines (homologous coefficients),—the fourth to the ninth $(c_4, c_5 \ldots c_9)$ and the twelfth $(c_{12})$ image coefficients undergoing a PCM encoding, — and the tenth $(c_{10})$ and eleventh $(c_{11})$ image coefficients, (in which there is basically concentrated the information of the colour sub-carrier), undergoing a specific coding of DPCM type, obtained by utilizing as a prediction signal, necessary to the encoding, a linear combination of the values of the tenth $(s_{10})$ and eleventh $(s_{11})$ decoded image coefficients relevant to the block occupying the same position in the line preceding in time, — thereby supplying corresponding coded coefficients $\overline{(d_1, d_2, d_3, c_4 \ldots c_9, d_{10}, d_{11}, c_{12})}$, said linear combination being defined by the product between the 2×1 matrix $\binom{s_{10}}{s_{11}}$ consisting of said tenth $(s_{10})$ and eleventh $(s_{11})$ decoded image coefficients and the 2×2 matrix $\left(\begin{smallmatrix}\alpha & \beta\\ \beta & \alpha\end{smallmatrix}\right)$, said numbers $\alpha$ and $\beta$ being equal respectively — to $+\cos 2\theta$ and $-\sin 2\theta$, when there is a phase *delay* of the burst between the line used for the prediction and the one subsequent in time, — and to $-\cos 2\theta$ and $+\sin 2\theta$ in the case of phase *lead*; the information relevant to the value of said phase angle $\theta$, that relevant to the beginning of each field (field START) and that relevant to the beginning of each line (line START), being part of the transmitted signal together with the said coded coefficients; upon reception and wherein: said information on the value of angle $\theta$ is first extracted, from which information the burst samples are reconstructed and said numbers $\alpha$ and $\beta$ are obtained, then by comparing two subsequent values of the angle $\theta$, beginning from the one immediately following the arrival of the signal of field START, the information is obtained that defines the phase relationship (lead-delay) of the burst necessary to determine the sign of numbers $\alpha$ and $\beta$, the 12 received image coefficients $(\overline{d_1}, \overline{d_2}, \overline{d_3}, \overline{c_4} \ldots \overline{c_9}, \overline{d_{10}}, \overline{d_{11}}, \overline{c_{12}})$ afterwards duly decoded, and more particularly the tenth and eleventh coefficients $(\overline{d_{10}}, \overline{d_{11}})$ undergoing a specific decoding of DPCM type in which the prediction signal, necessary to the decoding, is previously processed by means of the same linear transformation effected in transmission; an antitransform operation being performed on said 12 received coefficients, after the decoding, that is complementary to said operation of said discrete Fourier transform effected in transmission; and the antitransformed signal being combined with the information of line START, field START, and burst so as to recover the composite video signal.

2. Device adapted for carrying out the method of digital coding-decoding of composite PAL video signal according to claim 1, its transmitting part comprising:

— a synchronism unit (SU) able to extract from the analog video signal the field and line synchronisms, and, on the basis of these synchronisms, to emit at the output; a first timing signal for all the transmitter blocks, a second signal that detects in each line the portion containing the burst samples and the portion containing the image samples, a third signal (field synchronism) that identifies the beginning of each field;

— an oscillator circuit (GS) able to generate the sampling frequency (fs), by obtaining it from said first timing signal received from said synchronism unit (SU);

— a first logic circuit (FU1) able to receive the samples of the composite video signal from a digital-to-analog converter (A/D), timed by said sampling frequency (fs), and to select at each line, on the basis of said second signal it receives from said synchronism unit (SU), a block of 12 burst samples, beginning from a predetermined sample, and many blocks of 12 image samples, the first of said blocks being formed beginning from a predetermined sample; said first logic circuit (FU1) being also able to emit on a first output in sequence said 12 burst samples and said blocks of image samples and on a second output a suitable control signal;

— a transform circuit (DFT) able to effect the discrete Fourier transform on said blocks of 12 samples it receives from said first output of said logic circuit (FU1) and to produce successive series of 12 burst coefficients $(cb_1 \ldots cb_{12})$ and of 12 image coefficients $(c_1 \ldots c_{12})$;

**0019936**

— a first apparatus (SR) able to identify the angle $\theta$ of the phase of the burst utilizing the tenth ($cb_{10}$) and eleventh ($cb_{11}$) coefficient it receives from said transform circuit (DFT), on the basis of the control signal it receives from said second output of said first logic circuit (FU1), and able also to extract two numbers $\alpha$ and $\beta$ useful to the prediction of the coefficients carrying the chrominance information of the composite video signal;

— an encoding circuit (COD) able to receive, on the basis of the control signal it receives from said second output of said first logic circuit (FU1), from said first transform circuit (DFT) the series of 12 image coefficients ($c_1 \ldots c_{12}$) and to encode in DPCM the first three coefficients ($c_1, c_2, c_3$) of each series by utilizing the correlation existing among homologous coefficients, in PCM the coefficients from the fourth to the ninth ($c_4, c_5 \ldots c_9$) and the twelfth ($c_{12}$), and finally in DPCM the coefficients tenth ($c_{10}$) and eleventh ($c_{11}$), means (T1) being provided to perform said linear transformation on the prediction signal necessary to the encoding;

— a source encoder (CS) able to utilize; the information on the angle $\theta$ of the burst phase coming from said first apparatus (SR), the first and third of said signals emitted from said synchronism unit (SU), and each possible service signal that can be obtained in a known way, to recover a complete digital video signal ready to be transmitted;

— a channel encoder (CC) able to complete the video signal it receives from said source encoder (CS), with the necessary bits for the protection against noise;

the receiving part comprising:

— a channel decoder (DC) and a source decoder (DS) able to carry out functions perfectly complementary to those of said channel coder (CC) and source coder (CS) respectively, more particularly said source decoder (DS) is able to recognize and extract from said received digital video signal . the information of the angle $\theta$ of the burst phase, and of line and field START;

— a second apparatus (GB) able to utilize said information of the phase of the angle $\theta$, that it receives from said source decoder (DS), to recover the burst samples and to extract numbers $\alpha$ and $\beta$, able also to extract the information of burst lead or delay, relevant to the first two lines of the field, by means of the comparison between the two values of the phase angle $\theta$ received after the signal of field START;

— a decoding circuit (DEC) able to receive from said source decoder (DS) the twelve encoded coefficients ($\overline{d_1}, \overline{d_2}, \overline{d_3}, \overline{c_4} \ldots \overline{c_9}, \overline{d_{10}}, \overline{d_{11}}, \overline{c_{12}}$) of the image signal and decode them in a perfectly complementary way to that of said coding circuit (COD);

— an inverse-transform circuit (IDFT) able to perform perfectly complementary functions to that of said transform circuit (DFT);

— a second logic circuit (FU2) able to receive the burst samples from said second apparatus (GB) and the sequence of the blocks of 12 image samples coming from said inverse-transform circuit (IDFT) and able, on the basis of the information of line and field START it receives from said source decoder (DS), to allocate said burst samples and said sequence of image samples in the suitable time positions of the composite video signal, producing at the output a digital video signal that is sent to a digital-to-analog converter (D/A) to be converted into analog form;

— a signal generator (SC) able to receive from said source decoder (DS) the information of line START and field START and to generate in analogous form the synchronism signals necessary to reconstruct the complete video signal;

— a third apparatus (AS) able to receive said analog video signal from said digital-to-analog converter (D/A) and to add the necessary analog synchronism signals it receives from said signal generator (SC) and any further service signal, so as to emit at the output a complete video signal.

3. Device for digital coding-decoding of composite PAL video signal according to claim 2, characterized in that said control signal emitted on said second output of said first logic circuit (FU1) performs at the same time as enabling signal for said first apparatus (SR) and as disabling signal for said coding circuit (COD) and vice-versa, the first case taking place when from said first output of said first logic circuit (FU1) the burst samples are emitted and the opposite case for all the blocks of 12 image samples.

4. Device for digital coding and decoding of composite PAL video signal according to claim 2, characterized in that said first apparatus (SR) consists of:

— a normalization circuit (NR) able to effect the normalization according to the factor

$$1/\sqrt{cb_{10}^2+cb_{11}^2}$$

of the tenth ($cb_{10}$) and eleventh ($cb_{11}$) coefficients of the burst that receives from said transformation circuit (DFT) so as to obtain sine and cosine functions of the angle $\theta$ defining the phase burst;

— a memory (TB) into which are stored the functions of arc sine and arc cosine, able to get the value of the angle $\theta$ on the basis of the functions $\sin \theta$ and $\cos \theta$ it receives from said normalization circuit (NR);

— a fourth apparatus (DP1) able to receive from said memory (TB) the value of the angle $\theta$

and to supply at the output the sine and cosine functions of the double angle $2\theta$;

— a fifth apparatus (RA1) able to determine the phase shift undergone by the burst between the first line of a field and the subsequent one, by means of the comparison of the values of angle $\theta$, it receives from said memory (TB), relevant to the first two lines, and to emit at the output a signal indicating whether the burst phase shift is delayed or leaded;

— a sixth apparatus (I1) able to receive from said fourth apparatus (DP1) the functions of sin $2\theta$ and cos $2\theta$ and from said fifth apparatus (RA1) the signal denoting the phase lead or the phase delay of the burst and to consequently generate, at each line, the pair of functions $+\cos 2\theta$, $-\sin 2\theta$ when a phase delay occurs, and the pair $-\cos 2\theta$, $+\sin 2\theta$ in case of phase lead, said pairs of functions with the corresponding signs forming basically said numbers $\alpha$ and $\beta$.

5. Device for the digital coding-decoding of composite PAL video signal according to claims 2 and 4 characterized in that said coding circuit (COD) comprises:

— three identical circuits for the coding in DPCM of said first image coefficients ($c_1$, $c_2$, $c_3$);

— seven quantizers ($Q_4 \ldots Q_9$, $Q_{12}$) able to code in PCM said image coefficients from the 4-th to the 9-th ($c_4 \ldots c_9$) and the twelfth ($c_{12}$);

— a circuit for the coding in DPCM of said tenth ($c_{10}$) and eleventh ($c_{11}$) image coefficients able to effect on them an encoding in DPCM by utilizing as prediction signal a linear combination, according to said numbers $\alpha$ and $\beta$, of the values of said tenth ($s_{10}$) and eleventh ($s_{11}$) decoded coefficients relating to the block that occupies the same position in the line preceding in time, said linear combination being effected in a seventh apparatus (T1).

6. Device for digital coding and decoding of PAL composite video signal according to claims 2 and 4, characterized in that said decoding circuit (DEC) comprises:

— three identical circuits for the DPCM decoding of said first three coded image coefficients ($\bar{d}_1$, $\bar{d}_2$, $\bar{d}_3$);

— seven converting circuits ($R_4^{-1} \ldots R_9^{-1}$, $R_{12}^{-1}$) able to recover, for each one of said seven image coefficients coded in PCM ($\bar{c}_4 \ldots \bar{c}_9$, $\bar{c}_{12}$) the number of bits they had prior to the quantization;

— a circuit for the DPCM decoding of said tenth ($\bar{d}_{10}$) and eleventh ($\bar{d}_{11}$) coded image coefficients, able to effect on them a DPCM decoding by utilizing as prediction signal a linear combination, according to said numbers $\alpha$ and $\beta$, of the values of said tenth

($s_{10}$) and eleventh ($s_{11}$) decoded coefficients, relevant to the block occupying the same position in the line preceding in time, said linear combination being effected in an eighth apparatus (T2) quite analogous to said seventh apparatus (T1).

7. Device for the digital coding and decoding of composite PAL video signals according to claims 5 and 6, characterized in that said seventh apparatus (T1) consists of:

— a two-cell register (W) able to store said numbers $\alpha$ and $\beta$, that are utilized to predict the tenth ($c_{10}$) and eleventh ($c_{11}$) image coefficient of each one of said block relating to a line;

— a first (M1) and a second (M2) multipliers able to effect the product respectively between said numbers $\alpha$ and $\beta$ and the tenth decoded coefficient ($s_{10}$)$_r$ relevant to the block occupying the same position in the preceding line;

— a third (M3) and a fourth (M4) multiplier, able to effect the product between said numbers $\alpha$ and $\beta$ and the eleventh decoded coefficient ($s_{11}$)$_r$ relevant to the block occupying the same position in the preceding line;

— a first adder (P1) able to make the addition between the output signal, whose sign is inverted, from said first multiplier (M1), and the one outgoing from said third multiplier (M3), the result of said addition supplying the prediction value of said tenth coefficient ($c_{10}$);

— a second adder (P2) able to make the addition between the output signal from said second (M2) and fourth (M4) multiplier, the result of said addition supplying the prediction value of said eleventh coefficient ($c_{11}$).

8. Device for the digital coding and decoding of PAL composite video signal according to claims 2 and 5, characterized in that said three identical circuits for the coding in DPCM of said first three image coefficients ($c_1$, $c_2$, $c_3$) are of the type having a variable quantization characteristic, said characteristic being automatically adapted to the statistical local characteristics of the processed coefficients.

## Patentansprüche

1. Verfahren zum digitalen Kodieren und Dekodieren eines zusammengesetzten PAL-Videosignals, bei dem man beim Senden folgende Schritte durchführt: man extrahiert zuerst die Zeilen-START- und Halbbild-START-Information aus dem Videoteil des analogen Videosignals, das man dann mit einer Frequenz fs abtastet, die von der Frequenz fsc des Farb-Hilfsträgers entsprechend der Beziehung abhängt:

$$fs = \frac{12}{5}(fsc - 25\ Hz);$$

man extrahiert mit der Frequenzy fs von dem Burstsignal jeder Zeile zwölf Burst-Abtastwerte, beginnend bei einem gegebenen Abtastwert; man gruppiert die Abtastwerte des für jede Zeile des Halbbilds bedeutsamen Bildsignals in Blöcke von 12 Bildabtastwerten; man führt dann an den zwölf Burst-Abtastwerten und an den Blöcken der zwölf Bild-Abtastwerte eine diskrete Fourier-Transformation zur Erzeugung aufeinanderfolgender Serien von zwölf Koeffizienten durch, wobei eine Anzahl dieser Serien sich auf den Burst ($cb_1 \ldots cb_{12}$), andere auf das Bildsignal ($c_1 \ldots c_{12}$) beziehen und aus jeder Serie von zwölf Burst-Koeffizienten nur der zehnte ($cb_{10}$) und der elfte ($cb_{11}$) Koeffizient verwendet werden, die die Komponenten eines den Burst repräsentierenden rotierenden Vektors sind und mit einem Normalisationsfaktor

$$1/\sqrt{cb_{10}^2 + cb_{11}^2}$$

multipliziert werden, so daß man die Winkelfunktion eines die Phase des rotierenden Vektors bestimmenden Winkels $\theta$ erhält; man unterwirft die ersten drei Koeffizienten ($c_1$, $c_2$, $c_3$) jeder Serie der zwölf Koeffizienten des Bildsignals (Bildkoeffizienten) ein üblichen DPCM-Kodierung, die die zwischen Bildkoeffizienten, die zu gleiche Position in zeitlich aneinandergrenzenden Zeilen belegenden Blöcken gehören (homologe Koeffizienten) bestehende Korrelation berücksichtigt, die vierten bis neunten Bildkoeffizienten ($c_4$, $c_5 \ldots c_9$) und den zwölften Bildkoeffizienten ($c_{12}$) einer PCM-Kodierung und den zehnten ($c_{10}$) und elften ($c_{11}$) Bildkoeffizienten (in denen im wesentlichen die Information des Farb-Hilfsträgers konzentriert ist) einer spezifischen DPCM-Kodierung, die man dadurch erhält, daß man als das für die Kodierung notwendige Vorhersagesignal eine lineare Kombination der Werte des zehnten ($s_{10}$) und des elften ($s_{11}$) dekodierten Bildkoeffizienten auswertet, die zu dem Block gehören, der die selbe Position in der zeitlich vorhergehenden Zeile einnimmt, wodurch entsprechende kodierte Koeffizienten ($\overline{d}_1$, $\overline{d}_2$, $\overline{d}_3$, $\overline{c}_4 \ldots \overline{c}_9$, $\overline{d}_{10}$, $\overline{d}_{11}$, $\overline{c}_{12}$) geliefert werden und die lineare Kombination aus dem Produkt zwischen der $2 \times 1$ Matrix $\binom{s_{10}}{s_{11}}$, die aus dem zehnten ($s_{10}$) und dem elften ($s_{11}$) dekodierten Bildkoeffizienten besteht, und der $2 \times 2$ Matrix $\left(\begin{smallmatrix}-\alpha & \beta \\ \beta & \alpha\end{smallmatrix}\right)$, wobei die Zahlen $\alpha$ und $\beta$ gleich $+\cos 2\theta$ bzw. $-\sin 2\theta$ sind, wenn zwischen der für die Vorhersage verwendeten Zeile und der ihr zeitlich nachfolgenden Zeile der Burst eine Phasennacheilung aufweist, und gleich $-\cos 2\theta$ bzw. $+\sin 2\theta$ im Fall einer voreilenden Phase sind, besteht, wobei sich die auf den Phasenwinkel $\theta$ beziehende, die auf den Anfang jedes Halbbilds (Halbbild-START) beziehende und die auf den Anfang jeder Zeile (Zeilen-START) beziehende Information zusammen mit den kodierten Koeffizienten einen Teil des übertragenen Signals darstellen; und bei dem man beim Empfang folgende Schritte durchführt: man extrahiert zuerst die Information über den Wert des Winkels $\theta$ und rekonstruiert aus dieser Information die Burst-Abtastwerte und erhält die Zahlen $\alpha$ und $\beta$ und dann durch Vergleich zweier aufeinanderfolgender Werte des Winkels $\theta$, beginnend von dem unmittelbar dem Eintreffen des Signals Halbbild-START folgenden, die Information, die die zum Bestimmen der Vorzeichen der Zahlen $\alpha$ und $\beta$ notwendige Phasenbeziehung (Voreilung-Nacheilung) des Bursts festlegt, woraufhin man dann die zwölf empfangenen Bildkoeffizienten ($\overline{d}_1$, $\overline{d}_2$, $\overline{d}_3$, $\overline{c}_4 \ldots \overline{c}_9$, $\overline{d}_{10}$, $\overline{d}_{11}$, $\overline{c}_{12}$) entsprechend dekodiert und speziell den zehnten und den elften Koeffizienten ($\overline{d}_{10}$, $\overline{d}_{11}$) einer spezifischen DPCM-Dekodierung unterwirft, wobei man das für die Dekodierung erforderliche Vorhersagesignal vorher mit der gleichen linearen Transformation, wie sie beim Senden durchgeführt wird, verarbeitet, und man an den zwölf empfangenen Koeffizienten nach dem Dekodieren einen Antitransformationsvorgang durchführt, der der beim Senden durchgeführten diskreten Fouriertransformation komplementär ist, und das antitransformierte Signal mit der Information Zeilen-START, Halbbild-START und Burst so kombiniert, daß man das zusammengesetzte Videosignal wiederherstellt.

2. Anordnung zum Durchführen des Verfahrens des digitalen Kodierens/Dekodierens eines zusammengesetzten PAL-Video-Signals nach Anspruch 1, die senderseitig aus folgenden Einzelschaltungen besteht:

— einer Synchronismuseinheit (SU), die aus dem analogen Videosignal die Halbbild- und Zeilensynchronismen extrahiert und auf der Basis dieser Synchronismen ausgangsseitig folgende Signale emittiert: ein erstes Zeitsteuersignal für sämtliche Senderblöcke, ein zweites Signal, das in jeder Zeile den die Burst-Abtastwerte enthaltenden Teil und den die Bild-Abtastwerte enthaltenden Teil detektiert, und ein drittes Signal (Halbbildsynchronismus), das den Beginn jedes Halbbilds identifiziert;

— einer Oszillatorschaltung (GS), die die Abtastfrequenz (fs) erzeugt, indem sie sie aus dem von der Synchronismuseinheit (SU) empfangenen ersten Zeitsteuersignal erhält;

— einer ersten logischen Schaltung (FU1), die die Abtastwerte des zusammengesetzten Videosignals von einem Digital/Analog-Umsetzer (A/D), der mit der Abtastfrequenz (fs) zeitgesteuert ist, empfängt und an jeder Zeile aufgrund des zweiten Signals, das sie von der Synchronismuseinheit (SU) empfängt, einen Block von zwölf Burst-Abtastwerten, beginnend von einem gegebenen Abtastwert, und viele Blöcke von zwölf Bild-Abtastwerten auswählt, wobei der erste der hierbei gebildeten Blöcke bei einem gegebenen Abtastwert beginnt; wobei die erste logische Schaltung (FU1) weiterhin an einer ersten Ausgansklemme in Aufeinanderfolge die zwölf Burst-Abtastwerte und die Blöcke der Bild-Abtastwerte und an einer zweiten Ausgangsklemme ein entsprechendes Steuersignal abgibt;

— einer Transformationsschaltung (DFT), die die diskrete Fourier-Transformation an diesen Blöcken der zwölf Abtastwerte, die sie von der ersten Ausgangsklemme der ersten logischen Schaltung (FU1) empfängt, durchführt und aufeinanderfolgende Serien von zwölf Burst-Koeffizienten ($cb_1 \ldots cb_{12}$) und von zwölf Bildkoeffizienten ($c_1 \ldots c_{12}$) erzeugt;

— einer ersten Vorrichtung (SR), die den Winkel $\theta$ der Phase des Bursts unter Verwendung des zehnten ($cb_{10}$) und elften ($cb_{11}$) Koeffizienten, die sie von der Transformationsschaltung (DFT) empfängt, und auf der Basis des Steuersignals, das sie von der zweiten Ausgangsklemme der ersten logischen Schaltung (FU1) empfängt, identifiziert und außerdem zwei Zahlen $\alpha$ und $\beta$ extrahiert, die für die Vorhersage der die Farbartinformation des zusammengesetzten Videosignals tragenden Koeffizienten zu verwenden sind;

— einer Kodierschaltung (COD), die auf der Basis der Steuersignals, das sie von der zweiten Ausgangsklemme der ersten logischen Schaltung (FU1) empfängt, von der ersten Transformationsschaltung (DFT) die Serie der zwölf Bildkoeffizienten ($c_1 \ldots c_{12}$) empfängt und in DPCM die ersten drei Koeffizienten ($c_1$, $c_2$, $c_3$) jeder Serie durch Auswertung der unter homologen Koeffizienten bestehenden Korrelation sowie in PCM die Koeffizienten vom vierten bis zum neunten Koeffizienten ($c_4$, $c_5 \ldots c_9$) und den zwölften Koeffizienten ($c_{12}$) und schließlich in DPCM den zehnten Koeffizienten ($c_{10e}$) und den elften Koeffizienten ($c_{11}$) kodiert, wobei eine Einrichtung (T1) zur Durchführung dieser linearen Transformation am für die Kodierung erforderlichen Vorhersagesignal vorhanden ist;

— einem Quellenkodierer (CS), der die folgenden Signale auswertet: die von der ersten Vorrichtung (SR) kommende Information über den Winkel $\theta$ der Burst-Phase, das erste und das dritte der von der Synchronismuseinheit (SU) emittierten Signale und jedes mögliche Dienstsignal, das in bekannter Weise zum Wiederherstellen eines vollständigen digitalen Videosignals, das zum Senden bereit ist, erhältlich ist;

— einem Kanalkodierer (CC), der das Videosignal, das er vom Quellenkodierer (CS) empfängt, durch die notwendigen Rauschsicherheits-Bits vervollständigt;

und die empfängerseitig aus folgenden Einzelschaltungen besteht:

— einem Kanaldekoder (DC) und einem Quellendekoder (DS), die den Funktionen des Kanalkodierers (CC) bzw. des Quellenkodierers (CS) genau komplementäre Funktionen ausführen und von denen der Quellendekoder (DS) aus dem empfangenen digitalen Videosignal die Information über den Winkel $\theta$ der Burst-Phase sowie des Zeilen-START und des Halbbild-START erkennt und extrahiert;

— einer zweiten Vorrichtung (GB), die die Information über die Phase des Winkels $\theta$, die sie vom Quellendekoder (DS) empfängt, auswertet, die Burst-Abtastwerte wiederherstellt, die Zahlen $\alpha$ und $\beta$ extrahiert und die Information über ein Voreilen oder Nacheilen des Bursts bezüglich der ersten beiden Zeilen des Halbbilds mit Hilfe eines Vergleichs zwischen den beiden Werten des nach dem Signal-Halbbild-START empfangenen Phasen winkels $\theta$ extrahiert;

— einer Dekodierschaltung (DEC), die vom Quellendekoder (DS) die zwölf kodierten Koeffizienten ($\overline{d}_1$, $\overline{d}_2$, $\overline{d}_3$, $\overline{c}_4 \ldots \overline{c}_9$, $\overline{d}_{10}$, $\overline{d}_{11}$, $\overline{c}_{12}$) des Bildsignals empfängt und sie in genau komplementärer Weise zur Durchführung durch die Kodierschaltung (COD) dekodiert;

— einer Invers - Transformationsschaltung (IDFT), die in im Vergleich zur Durchführung durch die Transformationsschaltung (DFT) genau komplementärer Weise wirkt;

— einer zweiten logischen Schaltung (FU2), die die Burst-Abtastwerte von der zweiten Vorrichtung (GB) und die Folge der Blöcke der zwölf Bild-Abtastwerte von der Invers-Transformationsschaltung (IDFT) empfängt und die auf der Basis der vom Quellendekoder (DS) empfangenen Information über Zeilen-START und Halbbild-START die Burst-Abtastwerte und die Folge der Bild-Abtastwerte in die entsprechenden zeitlichen Stellungen des zusammengesetzten Videosignals einordnet und ausgangsseitig ein digitales Videosignal erzeugt, das zum Umsetzen in analoge Form einem Digital/Analog-Umsetzer (D/A) eingespeist wird;

— einem Signalgenerator (SC), der vom Quellendekoder (DS) die Informationen Zeilen-START und Halbbild-START empfängt und in analoger Form die zum Rekonstruieren des vollständigen Videosignals erforderlichen Synchronismussignale erzeugt;

— einer dritten Vorrichtung (AS), die vom Digital/Analog-Umsetzer (D/A) das analoge Videosignal empfängt und ihm die erforderlichen analogen Synchronismussignale, die sie vom Signalgenerator (SC) empfängt, und irgendwelche weiteren Dienstsignale hinzufügt und somit ausgangsseitig ein vollständiges Videosignal abgibt.

3. Anordnung zum digitalen Kodieren/Dekodieren eines zusammengesetzten PAL-Videosignals nach Anspruch 2, dadurch gekennzeichnet, daß das am zweiten Ausgang der ersten logischen Schaltung (FU1) abgegebene Steuersignal gleichzeitig die Funktion eines Einschaltsignals für die erste Vorrichtung (SR) und die Funktion eines Ausschaltsignals für die Kodierschaltung (COD) ausführt bzw. umgedreht, wobei der erste Fall eintritt, wenn die Burst-Abtastwerte von der ersten Ausgangsklemme der ersten logischen Schaltung (FU1) abgegeben werden, und der entgegengesetzte Fall für alle Blöcke der zwölf Bildabtastwerte eintritt.

4. Anordnung zum digital Kodieren/Dekodieren eines zusammengesetzen PAL-Videosignals nach Anspruch 2, dadurch gekennzeichnet, daß die erste Vorrichtung (SR) aus folgenden Einzelschaltungen besteht:

— einer Normalisierungsschaltung (NR), die die Normalisierung entsprechend dem Faktor

$$1/\sqrt{cb_{10}^2+cb_{11}^2}$$

des zehnten ($cb_{10}$) und des elften ($cb_{11}$) Koeffizienten des Bursts durchführt, die sie von der Transformationsschaltung (DFT) empfängt, um so die Sinusfunktion und die Cosinusfunktion des die Burstphase angebenden Winkels $\theta$ zu erhalten;

— einem Speicher (TB), in den die Funktionen arcussinus und arcuscosinus eingeschrieben sind und der den Wert des Winkels $\theta$ auf der Basis der Funktionen $\sin \theta$ und $\cos \theta$, die er von der Normalisierungsschaltung (NR) empfängt, erhält;

— einer vierten Vorrichtung (DP1), die vom Speicher (TP) den Wert des Winkels $\theta$ empfängt und ausgangsseitig die Sinusfunktion und die Cosinusfunktion des doppelten Winkels $2\theta$ abgibt;

— einer fünften Vorrichtung (RA1), die die dem Burst auferlegte Phasenverschiebung zwischen der ersten Zeile eines Halbbilds und der nachfolgenden Zeile mit Hilfe eines Vergleichs der Werte des Winkels $\theta$, die sie vom Speicher (TB) bezüglich der ersten beiden Zeilen empfängt, bestimmt und ausgangsseitig ein Signal abgibt, das anzeigt, ob die Phasenverschiebung des Bursts voreilend oder nacheilend ist;

— einer sechsten Vorrichtung (I1), die von der vierten Vorrichtung (DP1) die Funktionen $\sin 2\theta$ und $\cos 2\theta$ und von der fünften Vorrichtung (RA1) das die Phasenvoreilung oder die Phasennacheilung des Bursts angebende Signal empfangen kann und die als Folge hiervon in jeder Zeile die beiden Funktionen $+\cos 2\theta$, $-\sin 2\theta$ dann, wenn eine Phasennacheilung vorliegt, und die beiden Funktionen $-\cos 2\theta$, $+\sin 2\theta$ dann, wenn eine Phasenvoreilung vorliegt, erzeugen kann, wobei diese beiden Funktionen mit den entsprechenden Vorzeichen im Grunde die Zahlen $\alpha$ und $\beta$ bilden.

5. Anordnung zum digitalen Kodieren/Dekodieren eines zusammengesetzten PAL-Videosignals nach den Ansprüchen 2 und 4, dadurch gekennzeichnet, daß die Kodierschaltung (COD) folgende Einzelschaltungen umfaßt:

— drei identische Schaltungen zum Kodieren der ersten Bildkoeffizienten ($c_1$, $c_2$, $c_3$) in DPCM;
— sieben Quantisierer ($Q_4 \ldots Q_9$, $Q_{12}$), die die Bildkoeffizienten vom vierten bis zum neunten Koeffizienten ($c_4 \ldots c_9$) und den zwölften Koeffizienten ($c_{12}$) in PCM kodieren;
— eine Schaltung zum Kodieren des zehnten ($c_{10}$) und des elften ($c_{11}$) Bildkoeffizienten in DPCM, die an diesen Koeffizienten die DPCM-Kodierung unter Verwendung einer linearen Kombination der Werte des zehnten ($s_{10}$) und des elften ($s_{11}$) dekodierten Koeffizienten, die sich auf den Block beziehen, der die gleiche Position in der zeitlich vorhergehenden Zeile einnimmt, gemäß den Zahlen $\alpha$ und $\beta$ als Vorhersagesignal durchführt, wobei die lineare Kombination in einer siebten Vorrichtung (T1) durchgeführt wird.

6. Anordnung zum digitalen Kodieren/Dekodieren von zusammengesetzten PAL-Videosignalen nach den Ansprüchen 2 und 4, dadurch gekennzeichnet, daß die Dekoderschaltung (DEC) folgende Einzelschaltungen umfaßt:

— drei identische Schaltungen für die DPCM-Dekodierung der ersten drei kodierten Bildkoeffizienten ($\bar{d}_1$, $\bar{d}_2$, $\bar{d}_3$);
— sieben Umwandlungsschaltungen ($\bar{R}_4^{-1} \ldots \bar{R}_9^1$, $\bar{R}_{12}^1$), die für jeden der sieben in PCM kodierten Bildkoeffizienten ($c_4 \ldots c_9$, $\bar{c}_{12}$) die Zahl der Bits, die die Koeffizienten vor der Quantifizierung hatten, wiederherstellen;
— eine Schaltung zur DPCM-Dekodierung des zehnten ($\bar{d}_{10}$) und des elften ($\bar{d}_{11}$) kodierten Bildkoeffizienten, die an diesen Koeffizienten durch Verwendung einer linearen Kombination entsprechend den Zahlen und $\beta$ der Werte des zehnten ($s_{10}$) und des elften ($s_{11}$) dekodierten Koeffizienten, die sich auf den die selbe Position in der zeitlich vorhergehenden Zeile belegenden Block beziehen, als Vorhersagesignal eine DPCM-Dekodierung durchführt, wobei die lineare Kombination in einer der siebten Vorrichtung (T1) vollständig analogen achten Vorrichtung (T2) durchgeführt wird.

7. Anordnung zum digitalen Kodieren und Dekodieren von zusammengesetzten PAL-Videosignalen nach den Ansprüchen 5 und 6, dadurch gekennzeichnet, daß die siebte Vorrichtung (T1) aus folgenden Einzelschaltungen besteht:

— einem zweizelligen Register (W), das die Zahlen $\alpha$ und $\beta$, die zum Vorhersagen des zehnten ($c_{10}$) und des elften ($c_{11}$) Bildkoeffizienten jedes der sich auf eine Zeile beziehenden Blöcke verwendet werden, speichert;

— einem ersten Multiplizierer (M1) und einem zweiten Multiplizierer (M2), die das Produkt zwischen den Zahlen $\alpha$ bzw. $\beta$ und dem zehnten dekodierten Koeffizienten $(s_{10})_r$, bezogen auf den die selbe Position in der vorhergehenden Zeile belegenden Block, erzeugen;

— einem dritten Multiplizierer (M3) und einem vierten Multiplizierer (M4), die das Produkt zwischen den Zahlen $\alpha$ bzw. $\beta$ und dem elften dekodierten Koeffizienten $(s_{11})_r$, bezogen auf den die selbe Position in der vorhergehenden Zeile belegenden Block, erzeugen;

— einem ersten Addierer (P1), der die Addition des Ausgangssignals des ersten Multiplizierers (M1), wobei dessen Vorzeichen gewechselt wird, mit dem Ausgangssignal des dritten Multiplizierer (M3) durchführt, wobei des Ergebnis dieser Addition den Vorhersagewert des zehnten Koeffizienten ($c_{10}$) ergibt;

— einem zweiten Addierer (P2), der die Addition des Ausgangssignals des zweiten Multiplizierers (M2) mit dem Ausgangssignal des vierten Multiplizierers (M4) durchführt, wobei des Ergebnis dieser Addition den Vorhersagewert elften Koeffizienten ($c_{11}$) ergibt.

8. Anordnung zum digitalen Kodieren und Dekodieren eines zusammengesetzten PAL-Videosignals nach den Ansprüchen 2 und 5, dadurch gekennzeichnet, daß die drei identischen Schaltungen zum Kodieren in DPCM der ersten drei Bildkoeffizienten ($c_1$, $c_2$, $c_3$) typengemäß eine variable Quantiseirungscharakteristik aufweisen, die automatisch an die statistischen örtlichen Charakteristiken des verarbeiteten Koeffizienten angepaßt wird.

### Revendications

1. Méthode de codage et décodage numérique d'un signal vidéo PAL composite où en transmission: l'on extrait avant tout l'information de DEBUT ligne et de DEBUT trame de la portion vidéo du signal vidéo analogique, qui va être échantillonné à la fréquence $f_s$,

$$f_s = \frac{12}{5} f_{sc} - 25 \text{ Hz});$$

ensuite l'on extrait 12 échantillons de synchronisation à partir d'un échantillon prédéterminé à une fréquence $f_s$ du signal de synchronisation de couleur de chaque ligne; enfin on regroupe les échantillons du signal d'image de chaque ligne de la trame en blocs de 12 échantillons d'image; on applique alors la transformée discrète de Fourier auxdits 12 échantillons de synchronisation et auxdits blocs de 12 échantillons d'image pour engendrer des séries de 12 coefficients, un nombre de de ces séries correspondant au signal de synchronisation de couleur ($cb_1 \ldots cb_{12}$), d'autres correspondant au signal d'image ($c_1 \ldots c_{12}$), de chaque série de 12 coefficients du signal de synchronization en utilisant seuls le dixième ($cb_{10}$) et l'onzième ($cb_{11}$) coefficients, qui sont les composantes d'un vecteur tournant réprésentant ledit signal de synchronisation et qui sont multipliés par un facteur de normalisation

$$1/\sqrt{cb_{10}^2 + cb_{11}^2}$$

de manière que l'on puisse obtenir les functions angulaires de l'angle $\theta$, qui définissent la phase dudit vecteur tournant, les trois premiers coefficients ($c_1$, $c_2$, $c_3$) de chaque série de 12 coefficients du signal d'image (coefficients d'image) étant soumis à un codage usuel en MIC différentielle qui tient en compte la corrélation qui existe entre les coefficients d'image qui font partie des blocs qui occupent la même position en lignes qui se succèdent l'une l'autre dans le temps (coefficients homologues), les coefficients d'image du quatrième jusqu'au neuvième ($c_4$, $c_5 \ldots c_9$) et le douzième ($c_{12}$) étant soumis à un codage en MIC, et le dixième ($c_{10}$) et l'onzième ($c_{11}$) coefficients d'image (dans lesquels on a concentré essentiellement l'information de la sous-porteuse de couleur) étant soumis à un codage spécifique en MIC différentielle obtenu en employant comme signal de prédiction, nécessaire au codage, une combinaison linéaire des valeurs du dixième ($s_{10}$) et onzième ($s_{11}$) coefficients d'image décodés correspondant au bloc qui occupe la même position dans la ligne qui précède dans le temps, ledit codage fournissant les coefficients codés correspondants ($\overline{d_1}$, $\overline{d_2}$, $\overline{d_3}$, $\overline{c_4} \ldots \overline{c_9}$, $\overline{c_{10}}$, $\overline{c_{11}}$, $\overline{c_{12}}$), ladite combinaison linéaire étant définie par le produit entre la matrice $2 \times 1$ $\binom{s_{10}}{s_{11}}$ qui est constituée par lesdits dixième ($s_{10}$) et onzième ($s_{11}$) coefficients décodés d'image et de la matrice $2 \times 2$ $\left(\begin{smallmatrix} -\alpha & \beta \\ \beta & \alpha \end{smallmatrix}\right)$, lesdits numéros $\alpha$ et $\beta$ étant égaux à $+\cos 2\theta$ et $-\sin 2\theta$ respectivement, lorsque entre la ligne employée pour la prédiction et l'autre qui suit dans le temps il y a un retard de phase dudit signal de synchronisation, aussi bien qu'à $-\cos 2\theta$ et $+\sin 2\theta$, quand il y a un avance de phase; l'information qui se réfère à la valeur dudit angle de phase $\theta$, celle qui se réfère au début de chaque trame (DEBUT de trame) aussi bien que celle qui se réfère au début de chaque ligne (DEBUT ligne) faisiant partie du signal transmis, de même lesdits coefficients codés; et où en réception: l'on extrait avant tout ladite information sur la valeur dudit angle $\theta$ qui permet de reconstituer les échantillons de synchronisation et d'obtenir

lesdits numéros $\alpha$ et $\beta$, et puis, à l'aide d'une comparaison entre deux valeurs successives de l'angle $\theta$, à partir de la valeur qui suit immédiatement l'arrivée du signal de DEBUT trame, l'on obtient l'information apte à définir la relation de phase (avance-retard) du signal de synchronisation nécessaire pour déterminer les signes des numéros $\alpha$ et $\beta$, les 12 coefficients d'image reçus ($\overline{d}_1$, $\overline{d}_2$, $\overline{d}_3$, $c_4 \ldots c_9$, $\overline{d}_{10}$, $\overline{d}_{11}$, $\overline{c}_{12}$) étant ensuite décodés de façon convenable, et plus en particulier le dixième ($\overline{d}_{10}$) et l'onzième ($\overline{d}_{11}$) coefficients étant soumis à un décodage spécifique du type MIC différentielle où le signal de prédiction nécessaire au décodage est préablement traité par la même transformation linéaire effectuée en transmission; en effectuant après le décodage une opération de transformation inverse, sur lesdits 12 coefficients reçus, qui est complémentaire de ladite opération de ladite transformée discrète de Fourier effectuée en transmission; et le signal de transformation inverse le combinant avec les informations de DEBUT ligne et de DEBUT trame, et avec le signal de synchronisation de façon à récupérer le signal vidéo composite.

2. Dispositif pour réaliser la méthode de codage-décodage numérique du signal vidéo PAL composite suivant la revendication 1, son côté transmission comprenant:

— une unité de synchronisation (SU) capable d'extraire du signal analogique de télévision les synchronismes de ligne et de trame et, sur la base desdits synchronismes, d'émettre à la sortie: un premier signal d'horloge pour tous les blocs du transmetteur, un deuxième signal qui identifie en chaque ligne la portion qui contient les échantillons de synchronisation et la portion qui contient les échantillons d'image et un troisième signal (synchronisme de trame) qui identifie le début de chaque trame;

— un circuit oscillateur (GS) capable d'engendrer la fréquence d'échantillonage ($f_s$) à l'aide du premier signal d'horloge qu'il reçoit de ladite unité de synchronisation (SU);

— un premier circuit logique (FU1) capable de recevoir les échantillons du signal vidéo composite d'un convertisseur numérique-analogique (A/D), synchronisé par ladite fréquence d'échantillonnage ($f_s$), et de selectionner à chaque ligne, sur la base dudit deuxième signal qu'il reçoit de ladite unité de synchronisme (SU), un bloc de 12 échantillons de synchronisation, à partir d'un échantillon prédéterminé, et une pluralité de blocs de 12 échantillons d'image, le premier desdites blocs étant formé à partir d'un échantillon prédéterminé; ledit premier circuit logique (FU1) étant capable aussi d'émettre sur une première sortie en séquence lesdits 12 échantillons de synchronisation et lesdits blocs d'échantillons d'image et sur une deuxième sortie un signal de contrôle convenable;

— un circuit de transformation (DFT) capable d'appliquer la transformée discrète de Fourier sur lesdits blocs de 12 échantillons qu'il reçoit de ladite première sortie dudit circuit logique (FU1) et d'engendrer des séquences de 12 coefficients de synchronisation ($cb_1 \ldots cb_{12}$) et d'image ($c_1 \ldots c_{12}$);

— un premier appareil (SR) apte à identifier l'angle $\theta$ de la phase du signal de synchronisation employant le dixième ($cb_{10}$) et onzième ($cb_{11}$) coefficient qu'il reçoit dudit circuit de transformation (DFT) sur la base du signal de contrôle qu'il reçoit de ladite deuxième sortie dudit premier circuit logique (FU1), et à obtenir de même deux numéros $\alpha$ et $\beta$ utiles à la prédiction des coefficients qui véhiculent l'information de chrominance du signal vidéo composite;

— un circuit de codage (COD) apte à recevoir, sur la base du signal de contrôle qu'il reçoit de ladite deuxième sortie dudit premier circuit logique (FU1), dudit premier circuit de transformation (DFT) les séries de 12 coefficients ($c_1 \ldots c_{12}$) d'image et à coder en MIC différentielle les premiers trois coefficients ($c_1$, $c_2$, $c_3$) de chaque série en employant la corrélation existant entre des coefficients homologues, en MIC les coefficients du quatrième au neuvième ($c_4 \ldots c_5 \ldots c_9$) et le douzième ($c_{12}$) et enfin en MIC différentielle le dixième ($c_{10}$) et onzième ($c_{11}$), des moyens (T1) étant prévus pour effectuer ladite transformation linéaire sur le signal de prédiction nécessaire au codage;

— un codeur de source apte à utiliser: l'information sur l'angle de la phase du signal de synchronisation provenant dudit premier appareil (SR), le premier et la troisième desdits signaux émis de la dite unité de synchronisation (SU), et tout signal éventuel de service qu'on peut obtenir de façon, connue, pour construire un signal numérique de télévision complet prêt à être transmis;

— un codeur de canal (CC) apte à compléter le signal de télévision, qu'il reçoit dudit codeur de source (CS), avec les bits nécessaires à la protection contre le bruit;

son côte réceptuer comprenant:

— un décodeur de canal (DC) et de source (DS) aptes à effectuer des fonctions parfaitement complémentaires desdits codeurs respectivement du canal (CC) et de source (CS); en particulier ledit décodeur de source (DS) est apte à reconnaître et à extraire du signal vidéo numérique reçu, les informations de l'angle $\theta$ de la phase du signal de synchronisation, et de DEBUT ligne et DEBUT trame;

— un deuxième appareil (GB) apte à utiliser ladite information sur l'angle $\theta$ qu'il reçoit dudit décodeur de source (DS), pour reconstituer les échantillons de synchronisation et pour obtenir les numéros $\alpha$ et $\beta$, apte de même à extraire l'information d'avance ou retard de phase du signal de synchronisation relative aux premières deux lignes de la trame, par la comparaison effectuée entre les deux valeurs de l'angle de phase $\theta$ reçues après le signal de DEBUT trame;

— un circuit de décodage (DEC) apte à recevoir dudit décodeur de source (DS) les 12 coefficients codés ($\bar{d}_1$, $\bar{d}_2$, $\bar{d}_3$, $\bar{c}_4 \ldots c_9$, $\bar{d}_{10}$, $\bar{d}_{11}$, $\bar{c}_{12}$) du signal d'image et à les décoder de façon parfaitement complémentaire de ce qui à été fait par le circuit de codage (COD);

— un circuit de transformation inverse (IDFT) apte à opérer de façon parfaitement complémentaire de celle dudit circuit de transformation (DFT);

— un deuxième circuit logique (FU2) apte à recevoir les échantillons de synchronisation dudit deuxième appareil (GB) et la séquence des blocs de 12 échantillon d'image qui proviennent dudit circuit de transformation inverse (IDFT) et apte, sur la base des informations de DEBUT ligne et DEBUT trame qu'il reçoit dudit décodeur de source (DS), à positionner lesdits échantillons de synchronisation et ladite séquence des échantillons d'image en de convenables positionnements temporels du signal vidéo composite, en fournissant à la sortie un signal vidéo numérique que l'on evoie à un convertisseur numériques-analogique (DIA) pour être converti sous forme analogique;

— un générateur de signaux (SC) apte à recevoir dudit décodeur de source (DS) les informations de DEBUT ligne et DEBUT trame et à engendrer sous forme analogique les signaux de synchronisation nécessaires à reconstituer le signal vidéo complet;

— un troisième appareil (AS) apte à recevoir ledit signal vidéo analogique dudit convertisseur numérique analogique (D/A) et à additionner les nécessaires signaux de synchronisation analogiques qu'il reçoit dudit générateur de signaux (SC) et tout signal de service éventuel, pour émettre à la sortie un signal de télévision complet.

3. Dispositif pour le codage et décodage numérique du signal vidéo PAL composite suivant la revendication 2, caractérisé en ce que ledit signal de contrôle émis sur ladite deuxième sortie dudit premier circuit logique (FU1) a au même temps les fonctions de signal de validation pour ledit premier appareil (SR) et d'inhibition pour ledit circuit codeur (COD) et vice-versa, le premier cas s'avérant lorsque de ladite première sortie dudit premier circuit logique (FU1) les échantillons de synchronisation sont émis et le cas contraire s'avérant pour tous les blocs de 12 échantillons d'image.

4. Dispositif pour le codage et décodage numérique du signal vidéo PAL composite suivant la revendication 2, caractérisé en ce que ledit premier appareil (SR) est constitué par:

— un circuit de normalisation (NR) apte à effectuer la normalisation, suivant le facteur

$$1/\sqrt{cb_{10}^2 + cb_{11}^2}$$

des dixième ($cb_{10}$) et onzième ($cb_{11}$) coefficients du signal de synchronisation qu'il reçoit dudit circuit de transformation (DFT) de manière à obtenir les fonctions sinus et cosinus de l'angle $\theta$ qui définit la phase du signal de synchronisation de couleur;

— une mémoire (TB), où sont stockées les fonctions arcsinus et arccosinus, apte à fournir la valeur de l'angle $\theta$ sur la base des fonctions $\sin \theta$ et $\cos \theta$ qu'elle reçoit dudit circuit de normalisation (NR);

— un quatrième appareil (DP1) apte à recevoir de ladite mémoire (TB) la valeur de l'angle $\theta$ et à fournir à la sortie les fonctions sinus et cosinus de l'angle double $2\theta$;

— un cinquième appareil (RA1) apte à déterminer le déplacement de phase subi par le signal de synchronisation entre la première ligne d'une trame et la suivante, à l'aide de la comparaison entre les valeurs de l'angle $\theta$ qu'il reçoit de ladite mémoire (TB), relatives aux deux premières lignes, et à émettre à la sortie un signal qu'indique si le déplacement de phase du signal de synchronisation est en avance ou en retard;

— un sixième appareil (I1) apte à recevoir dudit quatrième appareil (DP1) les fonctions $\sin 2\theta$ et $\cos 2\theta$, et dudit cinquième appareil (RA1) le signal qui indique l'avance où le retard de la phase du signal de synchronisation, et à engendrer en conséquence à la sortie, à chaque ligne, la paire de fonctions $+\cos 2\theta$, $-\sin 2\theta$ si s'avère un retard de phase, et la paire $-\cos 2\theta$, $+\sin 2\theta$ dans le cas d'avance de phase, ladite paire de fonctions, avec les signes correspondants, constituant surtout lesdits numéros $\alpha$ et $\beta$.

5. Dispositif pour le codage et décodage numérique du signal vidéo PAL composite, suivant les revendications 2 et 4, caractérisé en ce que ledit circuit codeur (COD) comprend:

— trois circuits identiques pour le codage en MIC différentielle desdits premiers coefficients d'image ($c_1$, $c_2$, $c_3$);

— sept quantificateurs ($Q_4, \ldots Q_9$, $Q_{12}$) aptes à coder en MIC lesdits coefficients d'image du quatrième au neuvième ($c_4 \ldots c_9$) et le douzième ($c_{12}$);

— un circuit pour le codage en MIC différentielle desdits dixième ($c_{10}$) et onzième ($c_{11}$) coefficients d'image, apte à effectuer sur eux un codage en MIC différentielle en employant comme signal de prédiction une combinaison linéaire, suivant lesdits numéros $\alpha$ et $\beta$, des valeurs dudit deuxième

$(s_{10})$ et onzième $(s_{11})$ coefficients décodés relatifs au bloc qui occupe la même position dans la ligne qui précède dans le temps, ladite combinaison linéaire étant effectuée dans un septième appareil (T1).

6. Dispositif pour le codage et décodage numérique du signal vidéo PAL composite, suivant les revendications 2 et 4, caractérisé en ce que ledit circuit décodeur (DEC) comprend:

— trois circuits identiques pour le décodage en MIC différentielle desdits premiers trois co-efficients d'image codés $(\bar{d}_1, \bar{d}_2, \bar{d}_3)$;

— sept circuits convertisseur $(R_4^{-1} \ldots R_9^{-1}, R_{12}^{-1})$ aptes à rétablir pour chacun desdits sept coefficients d'image codés en MIC $(\bar{c}_4 \ldots \bar{c}_9, \bar{c}_{12})$, le nombre de bits qu'ils avaient avant la quantification;

— un circuit pour le décodage en MIC différen-tielle desdits dixième $(\bar{d}_{10})$ et onzième $(\bar{d}_{11})$ coefficients d'image codés, apte à les décoder en MIC différentielle en employant comme signal de prédiction une combinaison linéaire, suivant lesdits numéros $\alpha$ et $\beta$, des valeurs desdits dixième $(s_{10})$ et onzième $(s_{11})$ coefficients décodés, relatifs au bloc qui occupe la même position dans la ligne précédente, ladite combinaison linéaire étant effectuée dans un huitième appareil (T2) complement analogue audit septième appareil (T1).

7. Dispositif pour le codage et décodage numérique du signal vidéo PAL composite suivant les revendications 5 et 6, caractérisé en ce que ledit septième appareil (T1) est constitué par:

— un registre à deux cellules (W) apte à stocker en mémoire lesdits numéros $\alpha$ et $\beta$, qui

servent à la prédiction des dixième $(c_{10})$ et onzième $(c_{11})$ coefficients d'image de chacun desdits blocs relatifs à une ligne;

— un premier (M1) et un deuxième (M2) multiplicateurs aptes à effectuer le produit respectivement entre lesdits numéros $\alpha$ et $\beta$ et le dixième coefficient décodé $(s_{10})$ relatif au bloc qui occupe la même position dans la ligne qui précède;

— un troisième (M3) et un quatrième (M4) multiplicateurs, aptes à effectuer le produit respectivement entre lesdits numéros $\alpha$ et $\beta$ et l'onzième coefficient décodé $(s_{11})$ relatif au bloc qui occupe la même position dans la ligne précédente;

— un premier additionneur (P1) apte à effectuer l'addition entre le signal changé de signe, à la sortie dudit premier multiplicateur (M1) et le signal à la sortie dudit troisième multiplicateur (M3) le résultat de ladite addition fournissant la valeur de prédiction dudit dixième coefficient $(c_{10})$;

— un deuxième additionneur (P2) apte à effectuer l'addition entre le signal à la sortie dudit deuxième (M2) et quatrième (M4) multiplicateurs, le résultat de ladite addition fournissant la valeur dudit onzième co-efficient $(c_{11})$.

8. Dispositif pour le codage et décodage numérique du signal vidéo PAL composite, suivant les revendications 2 et 5, caractérisé en ce que lesdits trois circuits identiques pour le codage en MIC différentielle desdits premiers trois coefficients d'image $(c_1, c_2, c_3)$ sont du type à caractéristique de quantification variable, ladite caractéristique étant automatiquement adaptée aux caractéristiques statistiques locales des coefficients traités.

FIG. 1

FIG. 2

FIG. 3

Fig.5

Fig. 4